# EUROPEAN PATENT APPLICATION

(11) **EP 4 531 382 A1**
(43) Date of publication of application: **02.04.2025**
(21) Application number: 24200275.6
(22) Date of filing: 13.09.2024
(51) Int. Cl.: H04L 69/22, H04W 12/106, H04L 9/40

(54) **UE PARAMETERS UPDATE (UPU) HEADER PROTECTION**

(30) Priority: 28.09.2023 US 202363541227 P; 22.08.2024 US 202418812474
(71) Applicant: Apple Inc., Cupertino, CA 95014 (US)
(72) Inventor: GUPTA, Vivek G., Cupertino, 95014 (US); HU, Haijing, Cupertino, 95014 (US); PRAKASAM, Sridhar, Cupertino, 95014 (US)
(74) Representative: Zacco Denmark A/S

(57) **Abstract**

Techniques are provided for protection of a user equipment (UE) parameter update (UPU) header component of the UPU transparent container which is part of the UPU information to update UE configuration parameters in the UE by the network via NAS signaling. An example method includes a UE generating a first message that includes an indication as to whether the UE supports protection of a UPU header. The UE can transmit the first message to an access and mobility management function (AMF) of a network. The UE can receive, from the network, a second message including UPU configuration parameters including a UPU header, the UPU header protected based at least in part on the indication.

## Description

### CROSS-REFERENCE TO RELATED APPLICATIONS

This application claims the benefit of U.S. Provisional Application No. 63/541,227, filed on September 28, 2023, and U.S. nonprovisional patent application No. 18/812,474, filed on August 22, 2024, which are incorporated by reference herein in its entirety for all purposes.

### BACKGROUND

Cellular communications can be defined in various standards to enable communications between a user equipment and a cellular network. For example, a long-term evolution (LTE) network and Fifth generation mobile network (5G) are wireless standards that aim to improve upon data transmission speed, reliability, availability, and more.

### BRIEF DESCRIPTION OF THE DRAWINGS

Figure 1 is an illustration for an example system for updating user equipment configuration parameters, according to one or more embodiments.
Figure 2 is an illustration of an example a UE policy classmark information element (IE), according to one or more embodiments.
Figure 3 is an illustration of an example a 5G mobile management (MM) capability IE, according to one or more embodiments.
Figure 4 is an illustration of an example IE for requesting whether a UPU is protected, according to one or more embodiments.
Figure 5 is an illustration of an IE for indicating whether a UE supports UPU header protection, according to one or more embodiments.
Figure 6 is an illustration of an IE for indicating a protected UPU header and unprotected UPU header, according to one or more embodiments.
Figure 7 is a process flow for UPU header protection, according to one or more embodiments.
Figure 8 is a process flow for UPU header protection, according to one or more embodiments.
Figure 9 is a process flow for UPU header protection, according to one or more embodiments.
Figure 10 is a process flow for UPU header protection, according to one or more embodiments.
Figure 11 is a process flow for UPU header protection, according to one or more embodiments.
Figure 12 illustrates an example of receive components, in accordance with some embodiments.
Figure 13 illustrates an example of a UE, in accordance with some embodiments.
Figure 14 illustrates an example of a network node, in accordance with some embodiments.

### DETAILED DESCRIPTION OF THE INVENTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B); and the phrase "based on A" means "based at least in part on A," for example, it could be "based solely on A" or it could be "based in part on A."

The following is a glossary of terms that may be used in this disclosure.

The term "circuitry" as used herein refers to, is part of, or includes hardware components such as an electronic circuit, a logic circuit, a processor (shared, dedicated, or group) or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer to an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "base station" as used herein refers to a device with radio communication capabilities, that is a network component of a communications network (or, more briefly, a network), and that may be configured as an access node in the communications network. A UE's access to the communications network may be managed at least in part by the base station, whereby the UE connects with the base station to access the communications network. Depending on the radio access technology (RAT), the base station can be referred to as a gNodeB (gNB), eNodeB (eNB), access point, etc.

The term "network" as used herein reference to a communications network that includes a set of network nodes configured to provide communications functions to a plurality of user equipment via one or more base stations. For instance, the network can be a public land mobile network (PLMN) that implements one or more communication technologies including, for instance, 5G communications.

The term "computer system" as used herein refers to any type of interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refer to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

The term "3GPP Access" refers to accesses (e.g., radio access technologies) that are specified by 3GPP standards. These accesses include, but are not limited to, GSM/GPRS, LTE, LTE-A, SGNR, or 6G. In general, 3GPP access refers to various types of cellular access technologies.

The term "Non-3GPP Access" refers to any accesses (e.g., radio access technologies) that are not specified by 3GPP standards. These accesses include, but are not limited to, WiMAX, CDMA2000, Wi-Fi, WLAN, or fixed networks. Non-3GPP accesses may be split into two categories, "trusted" and "untrusted." Trusted non-3GPP accesses can interact directly with an evolved packet core (EPC) or a 5G core (5GC), whereas untrusted non-3GPP accesses interwork with the EPC/5GC via a network entity, such as an Evolved Packet Data Gateway or a 5G NR gateway. In general, non-3GPP access refers to various types on non-cellular access technologies.

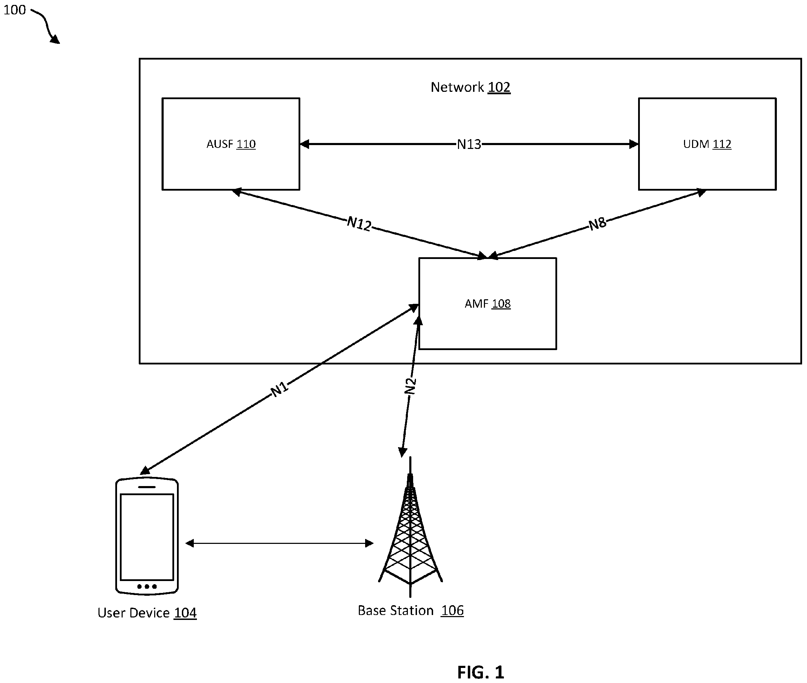

Figure 1 is an illustration 100 for an example system for updating user equipment configuration parameters, according to one or more embodiments. A network 102 can be in operable communication with a user equipment (UE) 104 and a base station 106. The network can include an access and mobility management function (AMF) 108, for managing non access stratum (NAS) messaging from the UE 104 via an N1 interface. The network 102 can include an authentication server function (AUSF) 110, for authentication of the UE 104. The AMF 108 can communicate with the AUSF via an N12 interface. The network 102 can include a unified data management (UDM) 112 for managing data. The UDM 112 can communicate with the AUSF via an N12 interface, and with the AMF 108 via an N8 interface. The AMF 108 can further communicate with a base station 106 via an N2 interface.

The network (e.g., a public land mobile network (PLMN)) 102 can update the UE's configuration parameters via NAS signaling. This permits the network 102 to securely and dynamically configure the UE configuration parameters stored on a subscriber identity module (e.g., a universal subscriber identity model (USIM) and the mobile equipment (ME). The network 102 can currently update the routing indicator, the default configured network slice selection assistance information (NSSAI), and the disaster roaming information. The update of the UE configuration parameters can be initiated by the network 102 using a network-initiated downlink NAS transport (e.g., using a downlink (DL) NAS TRANSPORT message), as described in 3GPP technical specification (TS) 24.501 V18.4.0 (2023-09). The network 102 and the UE 104 can use a UE parameters update (UPU) transparent container to communicate this configuration parameters information.

The network 102 can transmit UE parameter update (UPU) information (UPUInfo) to the UE 104. The UPU information can include UPU data and a UPU header which is transmitted from the UDM 112 to the AUSF 110. In some instances, the UPU header contains a flag indicating if an acknowledgment (ACK) is required from the UE 104 or not. As per stage 3 specs of UDM (3GPP TS 29.503 V18.3.0 (2023-09) and AUSF (3GPP TS 29.509 V18.3.0 (2023-09)), the UPU header is optional. Therefore, the UDM 112 may include a UPU header or may not include the UPU header. If the UPU header were to be included in the UPU info, the UPU header may also become protected along with the UPU data (for Message Authentication Code (MAC) generation). For example, the UPU-(MAC)-I_{AUSF} must include the UPU header and UPU Data. According to SA3 specs, UPU header is currently not protected. Therefore, if either the AUSF 110 or the UDM 112 protects the 'UPU Header' inside the UPUInfo, then, when the UE 104 receives the UPU transparent container, the UE 104 will generate a MAC without the UPU header, and the MAC comparison will fail.

As per security related discussions in system and system aspects (SA3) working groups (WG) in 3GPP, it has been determined that, the UPU header must also be protected. Because, if the UPU header is not protected, the AMF in the visited (V) PLMN can drop the UPU header and the UPU data, or even modify the UPU header. Therefore, the UPU procedure cannot be implemented correctly. As per technical specification (3GPP TS 24.501), the UPU header is currently not included as UPU data, and hence the UPU header is not protected (e.g., for MAC generation in UE).

The example system can follow a general process for updating the UE configuration parameters as described in (3GPP TS 33.501 V18.3.0 (2023-09))). The UDM 112 can decide to perform a UE Parameters Update (UPU) using a control plane procedure while the UE 104 is registered to the network 102. If the final consumer of any of the UE parameters to be updated (e.g., the updated Routing ID Data) is the USIM, the UDM 112 can protect these parameters using a secured packet mechanism.

The UDM 112 can invoke a Nausf_UPUProtection service operation message by including the UPU Data in a message to the AUSF to get UPU-MAC-IAUSF and CounterUPU. The UDM 112 can select the AUSF that holds the latest intermediate key (KAUSF) of the UE 104. If the UDM 112 decides that the UE 104 is to acknowledge the successful security check of the received UE Parameters Update Data, then the UDM 112 can set the corresponding indication in the UE Parameters Update Data (3GPP TS 24.501).

The UDM 112 can transmit a Nudm_SDM_Notification message to the AMF 108 and invoke Nudm_SDM_Notification service operation, which includes the UPU transparent container. The UDM 112 can further calculate and store UPU-XMAC-I_{UE} that it can use to compare with a UPU-XMAC-I_{UE} calculated by the UE. The AMF 108 can transmit a DL NAS transport transparent container that includes the UPU data, the UPU-MAC-I_{AUSF}, and CounterUPU to the UE 104. The UE 104 can calculate a UPU-MAC-I_{UE} and compare the calculated UPU-MAC-I_{UE} to the UPU-MAC-I_{AUSF} received from the AMF 108 to verify the DL NAS transport transparent container.

If the UDM 112 requested an ACK from the UE 104 and the UE 104 has successfully verified and updated the UE Parameters Update Data provided by the UDM 112, then the UE 104 can send a UL NAS Transport message to the serving AMF 108 with an ACK. If the transparent container with the UPU-MAC-IUE was received in the UL NAS Transport message, the AMF 108 can send an Nudm_SDM_Info request message with the transparent container to the UDM 112. If the UDM 112 indicated that the UE 104 is to acknowledge the successful security check of the received UE Parameters Update Data, then the UDM 112 can compare the received UPU-MAC-IUE with the expected UPU-XMAC-IUE that the UDM 112 had previously stored temporarily.

The embodiments herein address the above-referenced issues and provide techniques for permitting the network 102 to determine whether the UE 104 supports UPU header protection, when does the UDM 112 enable UPU header protection, how does the UE 104 indicate support for UPU header protection, how does the UE 104 know if the header is protected, and the impact of UPU header protection for pre-release 18 UEs.

The UE 104 can transmit a message to the network 102 indicating that it supports UPU header protection. For example, the UE 104 can indicate support for UPU header protection during a registration procedure. The indication can be an explicit indication during the registration procedure. For example, the UE 104 can indicate support for UPU header protection in a UE policy classmark information element (IE) as part of the UE STATE INDICATION message that is included in the REGISTRATION REQUEST message sent to the AMF 108. In another embodiment, the UE 104 can transmit the indication for support for UPU header protection in the 5G mobile management (5GMM) capability IE. The AMF 108 can include the indication in an authentication or registration message and provide the indication to the UDM 112. The UDM 112 can store the indication in the unified data repository (UDR). The UDM 112 may or may not support UPU header protection. If the UDM supports UPU header protection, then the UDM 112 can include the UPU header in the UPU data and protect both the UPU header and the UPU data.

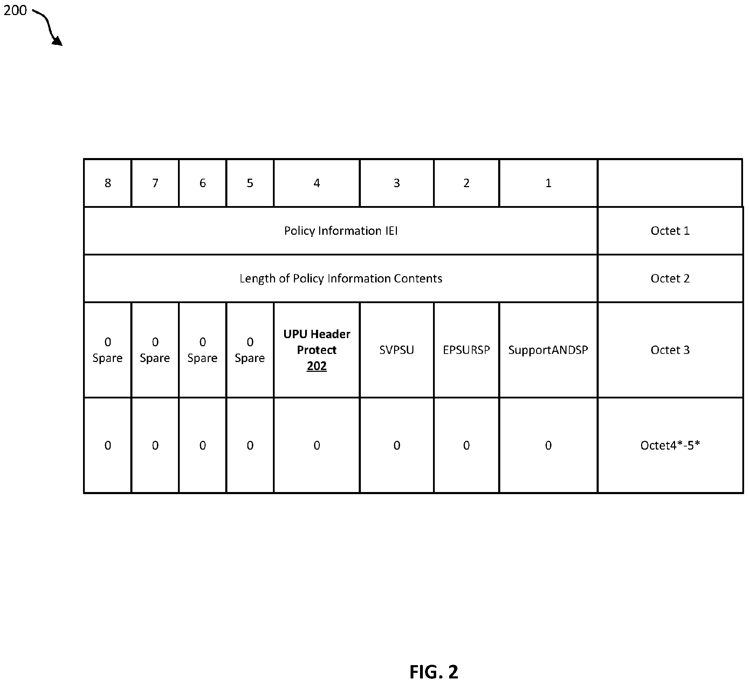

Figure 2 is an illustration of an example a UE policy classmark IE 200, according to one or more embodiments. The UE policy classmark IE 200 can provide information to the network (e.g., network 102) regarding the policy aspects of the UE 104. The UE policy classmark IE 200 can be a type 4 IE with a minimum length of 4 octets and a maximum length of 5 octets. As illustrated the UE policy classmark IE 200 can include UPU header protect information 202. For example, a bit associated with the UPU header protect information 202 can be a 1 if the UE (e.g., UE 104) supports UPU header protection and a 0 if the UE does not support UPU header protection.

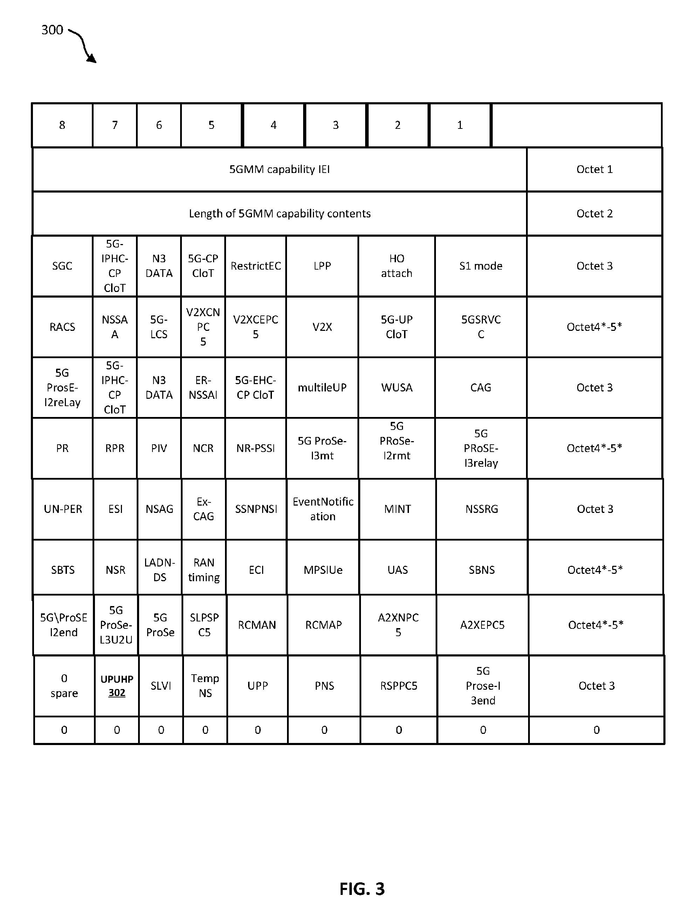

Figure 3 is an illustration of an example a 5GMM capability IE 300, according to one or more embodiments. The 5GMM capability IE 300 can provide information regarding UE relationship to the 5G core network (CN) or evolved packet system (EPS). The contents of the 5GMM capability IE 300 can affect how the network handles operation of the UE (e.g., UE 104). The 5GMM capability IE 300 can be a type 4 IE with a minimum length of 3 octets and a maximum length of 5 octets. For example, a bit associated with the UPU header protection (UPUHP) information 302 can be a 1 if the UE supports UPU header protection and a 0 if the UE does not support UPU header protection.

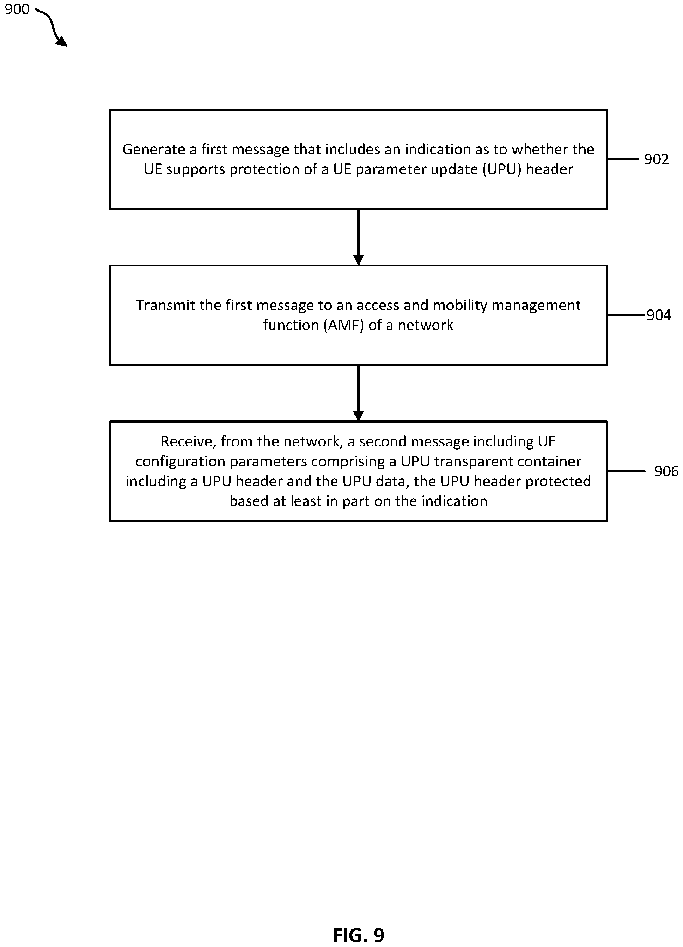

In some embodiments, the UE provides an indication of supporting UPU header protection based on a request from the network (e.g., network 102). FOR example, the UDM (e.g., UDM 112) can query the UE as whether the UE supports UPU header protection. The UDM can send the UE configuration parameters to the UE and include a request for an ACK, where the ACK can be a mechanism for informing the UDM that the UE support UPU header protection. The UPU transparent container can include a UPU header that is not protected, as the UDM may be unaware at this point whether the UE supports UPU header protection. For example, the UDM can transmit an UPU transparent container with a modified IE as similar to the IE described in Figure 9. 11.3.53A.6 of 3GPP TS 24.501 indicating that the UPU header is not protected. The UE 104 can receive the UPU transparent container with the protected data, unprotected UPU header, and ACK request. The UE can further respond to the ACK request with an indication as to whether the UE supports UPU header protection. For example, the UE can transmit an IE similar to the IE described in Figure 9. 11.3.53A.7 of 3GPP TS 24.501 with the indication as to whether the UE supports UPU header protection.

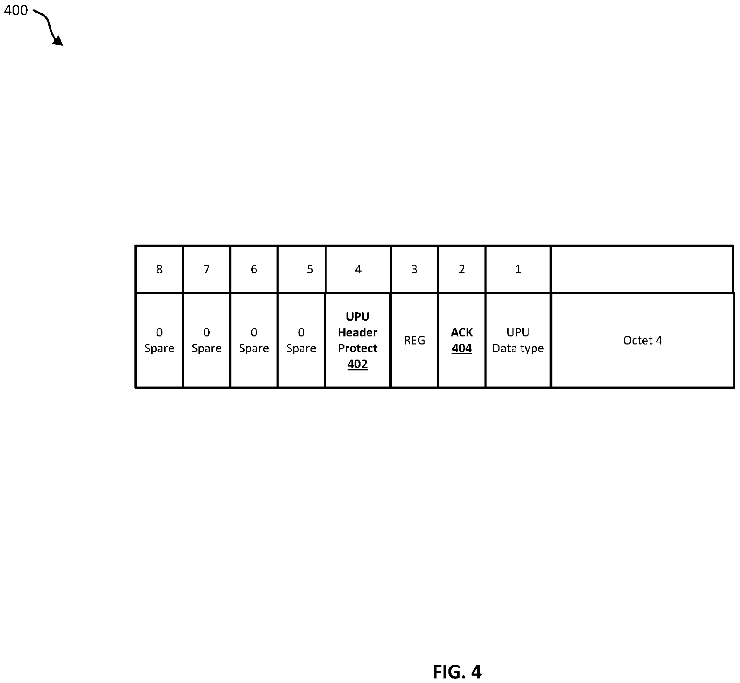

Figure 4 is an illustration of an example IE 400 for requesting whether a UPU is protected, according to one or more embodiments. The IE 400 can be used by the UDM (e.g., UDM 112) to indicated to the UE (e.g., UE) 104 as whether the UPU header is protected. For example, the UDM can set a bit associated with the UPU header protect 402 to 0 if the UPU header is not protected and set the bit to 1 if the UPU header is protected. The UDM can further set a bit associated with the ACK 404 to 1 if an ACK is requested. The UDM can further set a bit associated with the ACK 404 to 0 if no ACK is requested.

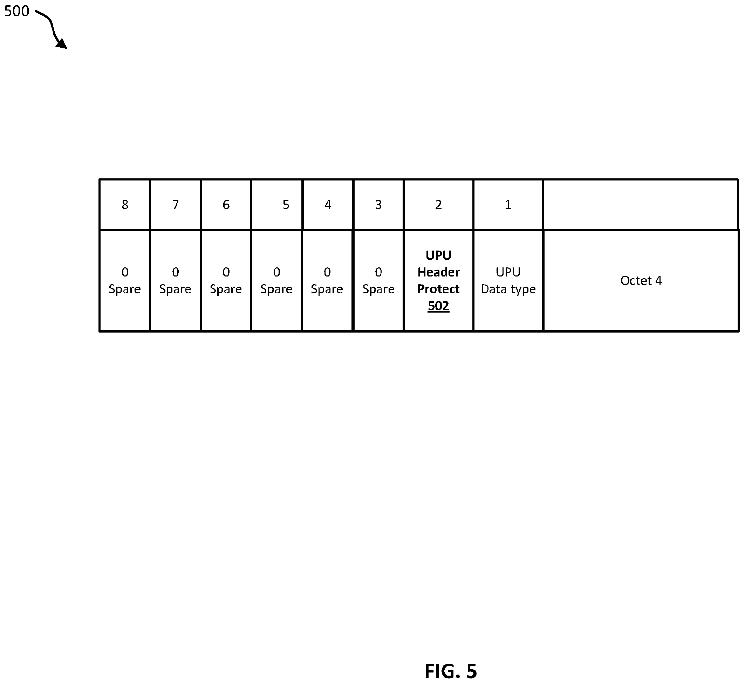

Figure 5 is an illustration of an IE 500 for indicating whether a UE supports UPU header protection, according to one or more embodiments. The UE (e.g., UE 104) can transmit the IE 500 to the UDM (e.g., UDM 112) to indicate whether the UE supports UPU header protection. For example, the UE can set a bit associated with the UPU header protect 502 to 1 if the UE supports UPU header protection. The UE can further set a bit associated with the UPU header protect 502 to 0 if the UE does not support UPU header protection.

The UDM (e.g., UDM 112) can provide the UPU header and an unprotected UPU in a same container. Assuming the UDM supports UPU header protection, the UDM can include the UPU header in the UPU data, and protect both the UPU header and the UPU data. The UDM can provide this information as part of a UPU data set with a UPU header protect bit set to indicate the UPU header is protected.

If the UE (e.g., UE 104) supports UPU header protection, the UE can check the IE to see if the UPU header protect is set to indicate that the UPU header is protected. Upon receiving the DL NAS transport message, the UE can calculate an enhancedUPU-MAC-I_{AUSF} in the same manner as the AUSF (e.g., AUSF 110) on receiving the enhanced UE parameters update data (e.g., including the protected UPU header), and the Counter_{UPU}. The UE can further verify whether the enhancedUPU-MAC-I_{AUSF} matches enhancedUPU-MAC-I_{AUSF} received in the UPU transparent container in the DL NAS transport message.

The UDM can also include the unprotected UPU header in the IE and only encode the UPU data. Furthermore, the UDM can set another bit associated with the UPU header protect to indicate that the UPU header is not protected. Therefore, in the instance, that the UE does not support UPU header protection, the UE can ignore the protected UPU data that includes a protected UPU header and decode the UPU data that does not include a protected UPU header.

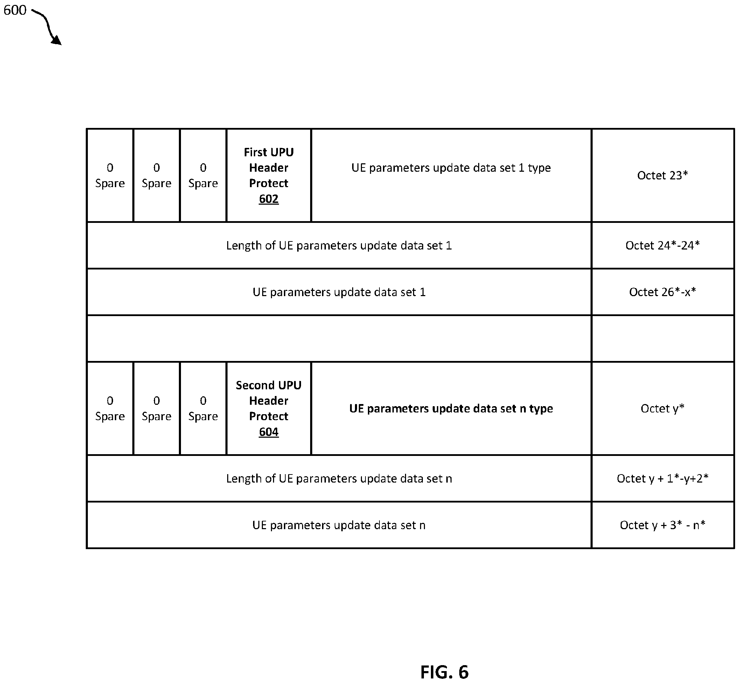

Figure 6 is an illustration of an IE 600 for indicating a protected UPU header and unprotected UPU header, according to one or more embodiments. The IE 600 include a bit associated with a first UPU header protect 602. For example, the first UPU header protect 602 can be set to 1 to indicate that the UPU header is protected. In this instance, the network (e.g., network 102) can include the UPU header in the UPU data and protect (e.g., encode) both the UPU header and the UPU data. A UE that support UPU header protection can decode the protected UPU along with the UPU header. The IE 600 can also include a bit associated with a second UPU header 604 and not set it to 1 to indicate that the UPU header is not protected. The IE 600 can include the same UPU data associated with the first UPU header protect 602 with the exception of not including the UPU header. Therefore, a UE that does not support UPU header protection can process the protected UPU data that does not include the UPU header.

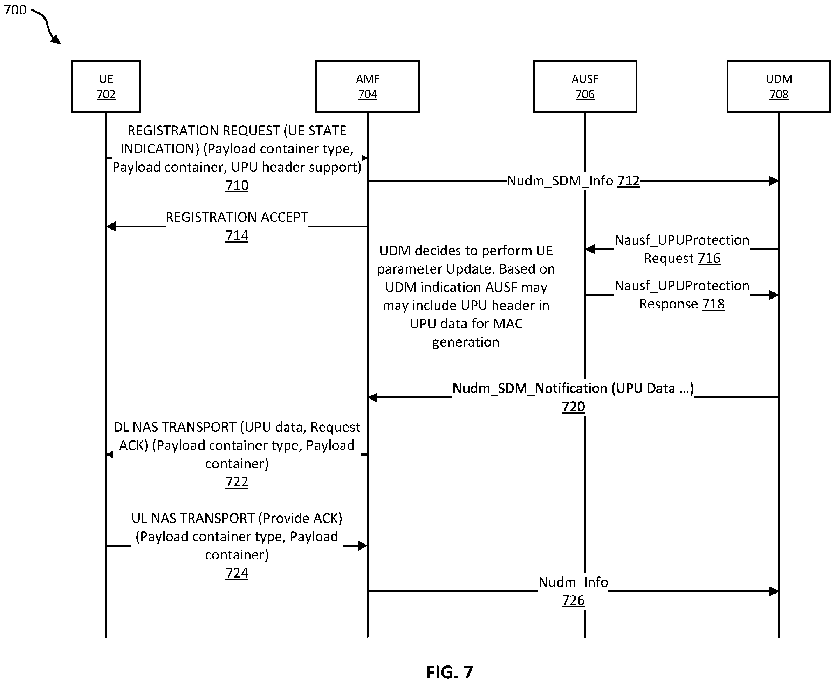

Figure 7 is a process flow 700 for UPU header protection, according to one or more embodiments. Figure 7 describes a scenario, in which a UE indicates support for UPU header protection as part of the registration process. As illustrated a UE 702 can be in operable communication with an AMF 704, an AUSF 706, and a UDM 708. AT 710, the UE 702 can transmit a REGISTRATION REQUEST to the AMF 704. The REGISTRATION REQUEST can include an indication as to whether the UE supports UPU header protection. The UE 702 can further provide an indication of UE policy selection identifier (UPSI) and access network discovery and selection policy (ANDSP) in the UE STATE INDICATION.

At 712, the AMF 704 can transmit an Nudm_SDM_Info message to the UDM 708, including the indication as to whether the UE 702 supports UPU header protection. At 714, the AMF 704 can transmit a REGISTRATION ACCEPT message to the UE 702.

At some point, the UDM 708 may decide to update the UE parameter configuration information. At 716, the UDM 708 can transmit a Nausf UPU protection request to the AUSF 706. The Nausf_UPU protection request can include an indication of whether to include the UPU header in the UPU data and protect both the UPU header and UPU data. This can include protecting the UPU header and the UPU data, only protecting the UPU data, or protecting both the UPU header and UPU data and also including protected UPU data without a protected UPU header. The UDM 708 can indicate which information to protect based on the indication from the UE 702 at steps 710 and 712. At 718, the AUSF 706 can transmit a Nudm_SDM_Info response to the UDM 708, that includes the protected information.

At 720 the UDM 708 can transmit a Nudm_SDM_Notification to the AMF 704, that includes the protected data. At 722, the AMF 704 can transmit a DL NAS TRANSPORT message to the UE 702, that includes the transparent container with the protected information. In some instances, the UDM 708 may indicate to include a request for an ACK in the transparent container.

The UE 702 can decode the UPU data and calculate the enhanced UPU- MAC-I security token and compare it with a UPU-MAC-I security token received via the transparent container to verify the transparent container. At 724, if the UDM requested an ACK, the UE 702 can transmit a UL NAS TRASPORT message to the AMF 704 that includes the ACK. At 726, the AMF 704 can transmit a Nudm_info message to the UDM 708 that includes the ACK.

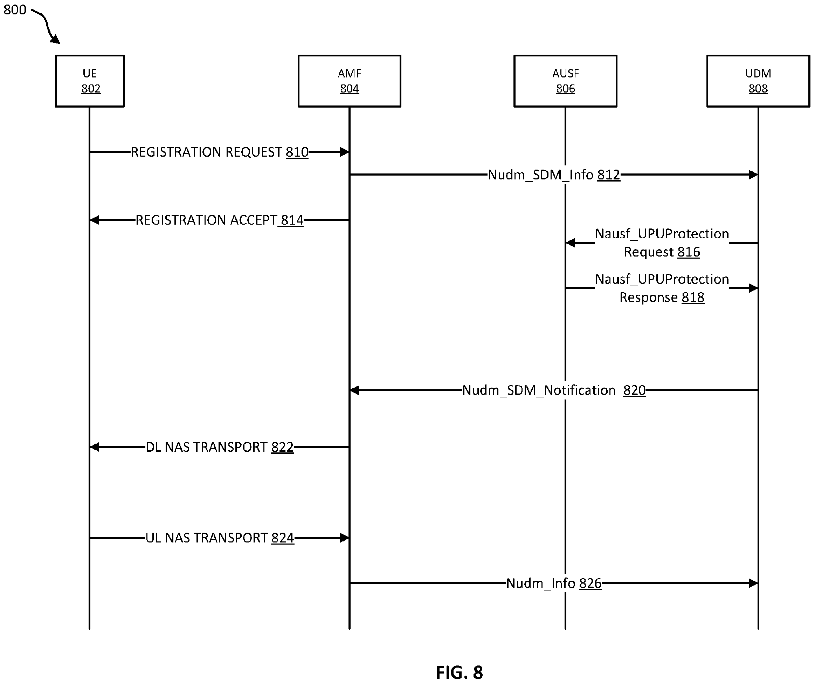

Figure 8 is a process flow 800 for UPU header protection, according to one or more embodiments. Figure 8 describes a scenario, in which a network asks the UE to indicate support for UPU header protection. As illustrated a UE 802 can be in operable communication with an AMF 804, an AUSF 806, and a UDM 808. At 810, the UE 702 can transmit a REGISTRATION REQUEST to the AMF 804.

At 812, the AMF 804 can transmit an Nudm_SDM_Info message to the UDM 808. At 814, the AMF 804 can transmit a REGISTRATION ACCEPT message to the UE 802.

At some point, the UDM 808 may decide to update the UE parameter configuration information. At 816, the UDM 808 can transmit a Nausf_UPU protection request to the AUSF 806. The Nausf_UPU protection request can include an indication to protect both the UPU data. At 818, the AUSF 806 can transmit a Nudm_SDM_Info response to the UDM 808, that includes the protected UPU data.

At 820 the UDM 808 can transmit a Nudm_SDM_Notification to the AMF 804, that includes the protected UPU data. At 822, the AMF 804 can transmit a DL NAS TRANSPORT message to the UE 802, that includes the transparent container with the protected information. The UDM 808 may indicate to include a request for an ACK in the transparent container. As described above, the UDM 808 can use the ACK to determine whether the UE 802 supports UPU header protection.

The UE 802 can decode the UPU data and calculate the enhanced UPU-MAC-I security token and compare it with a UPU- MAC-I security token received via the transparent container to verify the transparent container. At 826, the UE 802 can transmit a UL NAS TRASPORT message to the AMF 804 that includes the ACK. At 826, the AMF 804 can transmit a Nudm_info message to the UDM 808 that includes the ACK. Upon receiving the ACK, the UDM 808 is aware that the UE 802 supports UPU header protection. In the instance that the UDM decides to perform a subsequent UPU, the UDM 808 can request that the AUSF 806 include the UPU header in the UPU data and protect both the UPU header and the UPU data.

Figure 9 is a process flow 900 for UPU header protection, according to one or more embodiments. At 902, a UE can generate a first message that includes an indication as to whether the UE supports protection of a UE parameter update (UPU) header. The message can be part of a REGISTRATION REQUEST message.

At 904, the UE can transmit the first message to an AMF of a network. The first message can be sent as part of a registration procedure.

At 906, the UE can receive, from the network, a second message including UE configuration parameters comprising a UPU transparent container including a UPU header and the UPU data, the UPU header protected based at least in part on the indication. The UE can then decode the UPU data and verify the second message.

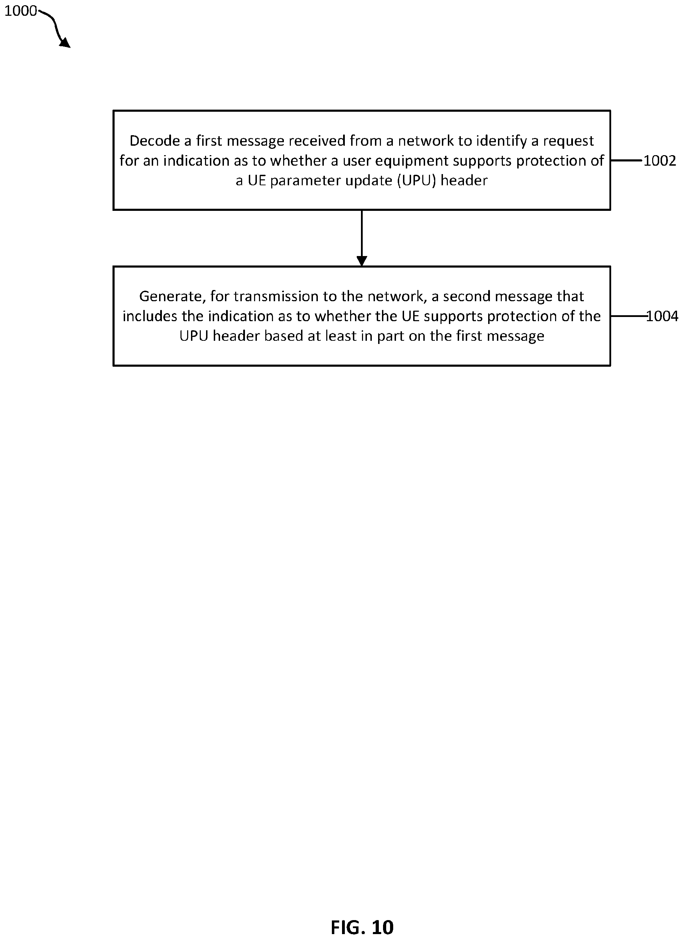

Figure 10 is a process flow 1000 for UPU header protection, according to one or more embodiments. At 1002, a UE can decode a first message received from a network to identify a request for an indication as to whether a user equipment supports protection of a UE parameter update (UPU) header. The message can be received in a transparent container. In particular, the UE can decode the UPU data and calculate the enhanced UPU- MAC-I security token and compare it with a UPU- MAC-I security token received via the transparent container to validate the transparent container.

At 1004, the UE can generate, for transmission to the network, a second message that includes the indication as to whether the UE supports protection of the UPU header based at least in part on the first message.

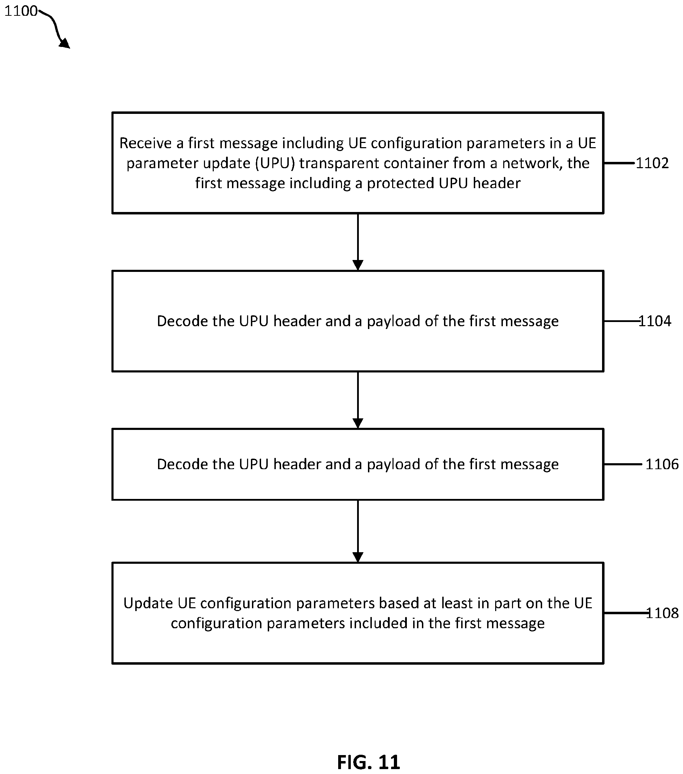

Figure 11 is a process flow 1100 for UPU header protection, according to one or more embodiments. At 1102, the UE can receive a first message including UE configuration parameters in a UPU transparent container from a network, the first message including a protected UPU header. The first message can be included in a transparent container and include a protected UPU header.

At 1104, the UE can decode the UPU header and a payload (e.g., UPU data) of the first message.

At 1106, the UE can validate the first message from the network. In particular, the UE can decode the UPU data and calculate the enhanced UPU- MAC-I security token and compare it with a UPU- MAC-I security token received via the transparent container to verify the transparent container. The validation can include using both the UPU header and the UPU data.

At 1108, the UE can update UE configuration parameters based at least in part on the UPU configuration parameters included in the first message.

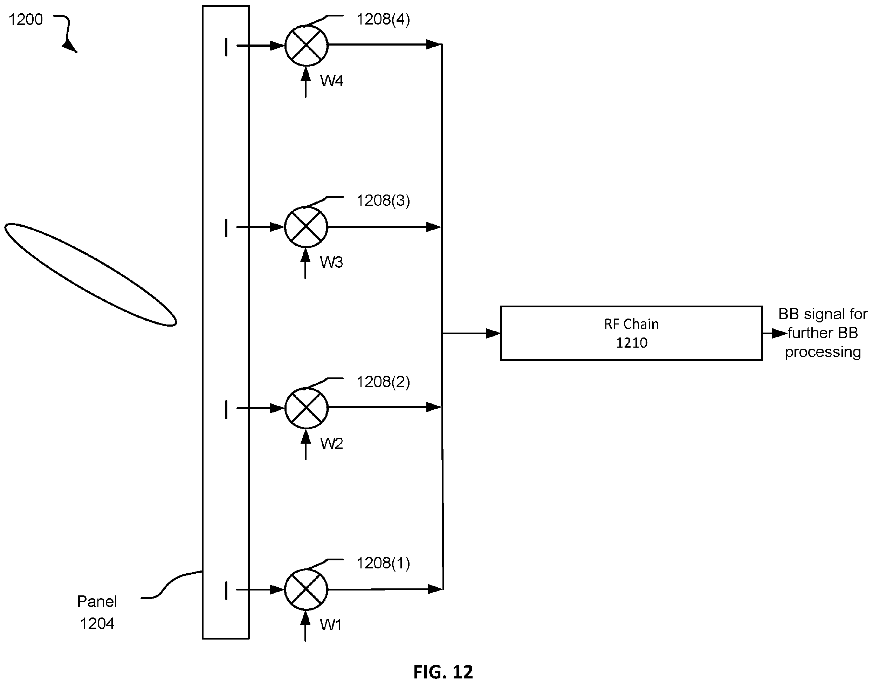

Figure 12 illustrates receive components 1200 of a UE (e.g., user device 104), in accordance with some embodiments. The receive components 1200 may include an antenna panel 1204 that includes a number of antenna elements. The panel 1204 is shown with four antenna elements, but other embodiments may include other numbers.

The antenna panel 1204 may be coupled to analog beamforming (BF) components that include a number of phase shifters 1208(1) - 1208(4). The phase shifters 1208(1) - 1208(4) may be coupled with a radio-frequency (RF) chain 1213. The RF chain 1213 may amplify a receive analog RF signal, down convert the RF signal to baseband, and convert the analog baseband signal to a digital baseband signal that may be provided to a baseband processor for further processing.

In various embodiments, control circuitry, which may reside in a baseband processor, may provide BF weights (e.g., W1 - W4), which may represent phase shift values, to the phase shifters 1208(1) - 1208(4) to provide a receive beam at the antenna panel 1204. These BF weights may be determined based on the channel-based beamforming.

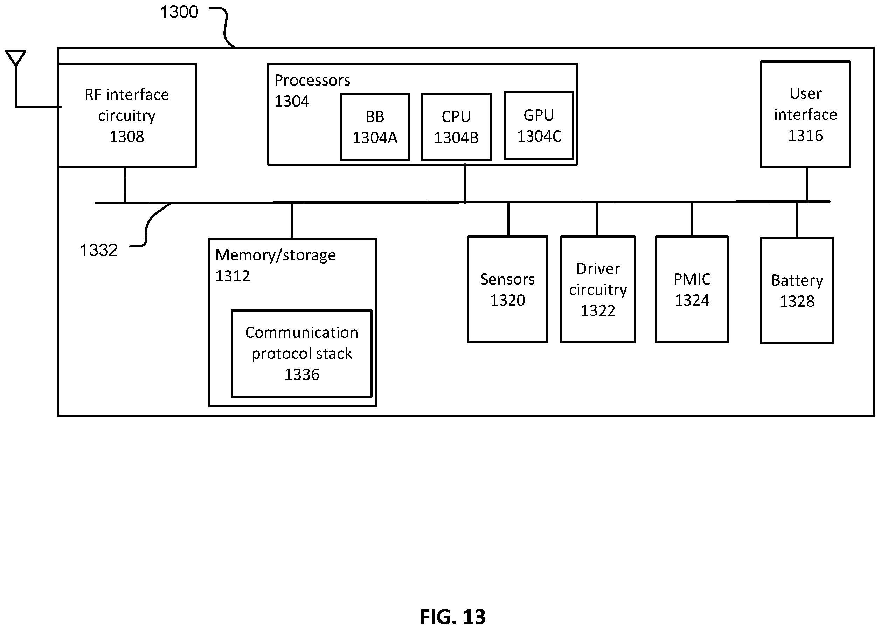

Figure 13 illustrates a UE 1300, in accordance with some embodiments. The UE 1300 may be similar to and substantially interchangeable with UE 1206 of Figure 12.

Similar to that described above with respect to UE 1300, the UE 1300 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices, or relaxed-IoT devices. In some embodiments, the UE may be a reduced capacity UE or NR-Light UE.

The UE 1300 may include processors 1304, RF interface circuitry 1308, memory/storage 1313, user interface 1316, sensors 1320, driver circuitry 1322, power management integrated circuit (PMIC) 1324, and battery 1328. The components of the UE 1300 may be implemented as integrated circuits (ICs), portions thereof, discrete electronic devices, or other modules, logic, hardware, software, firmware, or a combination thereof. The block diagram of Figure 13 is intended to show a high-level view of some of the components of the UE 1300. However, some of the components shown may be omitted, additional components may be present, and different arrangements of the components shown may occur in other implementations.

The components of the UE 1300 may be coupled with various other components over one or more interconnects 1332, which may represent any type of interface, input/output, bus (local, system, or expansion), transmission line, trace, optical connection, etc. that allows various circuit components (on common or different chips or chipsets) to interact with one another.

The processors 1304 may include processor circuitry such as, for example, baseband processor circuitry (BB) 1304A, central processor unit circuitry (CPU) 1304B, and graphics processor unit circuitry (GPU) 1304C. The processors 1304 may include any type of circuitry or processor circuitry that executes or otherwise operates computer-executable instructions, such as program code, software modules, or functional processes from memory/storage 1313 to cause the UE 1300 to perform operations as described herein.

In some embodiments, the baseband processor circuitry 1304A may access a communication protocol stack 1336 in the memory/storage 1313 to communicate over a 3GPP compatible network. In general, the baseband processor circuitry 1304A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum "NAS" layer. In some embodiments, the PHY layer operations may additionally/alternatively be performed by the components of the RF interface circuitry 1308.

The baseband processor circuitry 1304A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The memory/storage 1313 may include any type of volatile or non-volatile memory that may be distributed throughout the UE 1300. In some embodiments, some of the memory/storage 1313 may be located on the processors 1304 themselves (for example, L1 and L2 cache), while other memory/storage 1313 is external to the processors 1304 but accessible thereto via a memory interface. The memory/storage 1313 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1308 may include transceiver circuitry and a radio frequency front module (RFEM) that allows the UE 1300 to communicate with other devices over a radio access network. The RF interface circuitry 1308 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via an antenna 1324 and proceed to filter and amplify (with a low-noise amplifier) the signal. The signal may be provided to a receiver of the transceiver that down-converts the RF signal into a baseband signal that is provided to the baseband processor of the processors 1304.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1324.

In various embodiments, the RF interface circuitry 1308 may be configured to transmit/receive signals in a manner compatible with NR access technologies.

The antenna 1324 may include a number of antenna elements that each convert electrical signals into radio waves to travel through the air and to convert received radio waves into electrical signals. The antenna elements may be arranged into one or more antenna panels. The antenna 1324 may have antenna panels that are omnidirectional, directional, or a combination thereof to enable beamforming and multiple input, multiple output communications. The antenna 1324 may include microstrip antennas, printed antennas fabricated on the surface of one or more printed circuit boards, patch antennas, phased array antennas, etc. The antenna 1324 may have one or more panels designed for specific frequency bands including bands in FR1 or FR2.

The user interface circuitry 1316 includes various input/output (I/O) devices designed to enable user interaction with the UE 1300. The user interface 1316 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, projectors, etc.), with the output of characters, graphics, multimedia objects, and the like being generated or produced from the operation of the UE 1300.

The sensors 1320 may include devices, modules, or subsystems whose purpose is to detect events or changes in its environment and send the information (sensor data) about the detected events to some other device, module, subsystem, etc. Examples of such sensors include, inter alia, inertia measurement units comprising accelerometers; gyroscopes; or magnetometers; microelectromechanical systems or nanoelectromechanical systems comprising 3-axis accelerometers; 3-axis gyroscopes; or magnetometers; level sensors; flow sensors; temperature sensors (for example, thermistors); pressure sensors; barometric pressure sensors; gravimeters; altimeters; image capture devices (for example; cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1322 may include software and hardware elements that operate to control particular devices that are embedded in the UE 1300, attached to the UE 1300, or otherwise communicatively coupled with the UE 1300. The driver circuitry 1322 may include individual drivers allowing other components to interact with or control various input/output (I/O) devices that may be present within, or connected to, the UE 1300. For example, driver circuitry 1322 may include a display driver to control and allow access to a display device, a touchscreen driver to control and allow access to a touchscreen interface, sensor drivers to obtain sensor readings of sensor circuitry 1320 and control and allow access to sensor circuitry 1320, drivers to obtain actuator positions of electro-mechanic components or control and allow access to the electro-mechanic components, a camera driver to control and allow access to an embedded image capture device, audio drivers to control and allow access to one or more audio devices.

The PMIC 1324 may manage power provided to various components of the UE 1300. In particular, with respect to the processors 1304, the PMIC 1324 may control power-source selection, voltage scaling, battery charging, or DC-to-DC conversion.

In some embodiments, the PMIC 1324 may control, or otherwise be part of, various power saving mechanisms of the UE 1300. For example, if the platform UE is in an RRC_Connected state, where it is still connected to the radio access network (RAN) node as it expects to receive traffic shortly, then it may enter a state known as Discontinuous Reception Mode (DRX) after a period of inactivity. During this state, the UE 1300 may power down for brief intervals of times and thus save power. If there is no data traffic activity for an extended period of time, then the UE 1300 may transition off to an RRC_Idle state, where it disconnects from the network and does not perform operations such as channel quality feedback, handover, etc. The UE 1300 goes into a very low power state and it performs paging where again it periodically wakes up to listen to the network and then powers down again. The UE 1300 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 1328 may power the UE 1300, although in some examples the UE 1300 may be mounted deployed in a fixed location, and may have a power supply coupled to an electrical grid. The battery 1328 may be a lithium ion battery, a metal-air battery, such as a zinc-air battery, an aluminum-air battery, a lithium-air battery, and the like. In some implementations, such as in vehicle-based applications, the battery 1328 may be a typical lead-acid automotive battery.

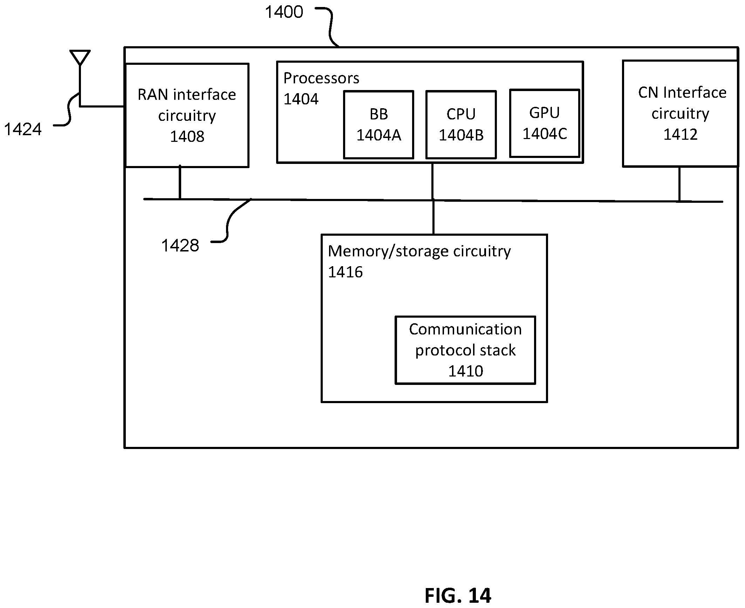

Figure 14 illustrates a network node 1400, in accordance with some embodiments. The network node 1400 may include processors 1404, RF interface circuitry 1408, core network (CN) interface circuitry 1413, and memory/storage circuitry 1416. The network node 1400 can be a node of a RAN or a CN.

The components of the network node 1400 may be coupled with various other components over one or more interconnects 1428.

The processors 1404, RF interface circuitry 1408, memory/storage circuitry 1416 (including communication protocol stack 1410), antenna 1424, and interconnects 1428 may be similar to like-named elements shown and described with respect to Figure 12.

The CN interface circuitry 1413 may provide connectivity to a CN, for example, a 4th Generation Core network (5GC) using a 4GC-compatible network interface protocol such as carrier Ethernet protocols, or some other suitable protocol. Network connectivity may be provided to/from the network node 1400 via a fiber optic or wireless backhaul. The CN interface circuitry 1413 may include one or more dedicated processors or FPGAs to communicate using one or more of the aforementioned protocols. In some implementations, the CN interface circuitry 1413 may include multiple controllers to provide connectivity to other networks using the same or different protocols.

As indicated above, in other embodiments, the network node 1400 can be a CN node. In these embodiments, the network node 1400 include RF interface circuitry 1408 for connectivity with a RAN. The RF interface circuitry 1408 may include one or more dedicated processors or FPGAs to communicate using one or more of the aforementioned protocols. In some implementations, the RF interface circuitry 1408 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further example embodiments are provided.

Example 1 can include a method, performed by a UE, the method comprising: generating a first message that includes an indication as to whether the UE supports protection of a UPU header; transmitting the first message to an AMF of a network; and receiving, from the network, a second message including UE configuration parameters comprising a UPU transparent container including a UPU header and the UPU data, the UPU header protected based at least in part on the indication.

Example 2 can include the method of example 1, wherein the method further comprises: generating a REGISTRATION REQUEST message for the AMF, wherein the REGISTRATION REQUEST message includes the first message.

Example 3 can include the method of any of examples 1 and 2, wherein generating the first message that includes an indication as to whether the UE supports protection of the UPU header comprises: configuring an IE to include a bit indicating that the UE supports protecting the UPU header,

Example 4 can include the method of example 3, wherein the IE is a UE policy classmark IE or a MM capability IE.

Example 5 can include an apparatus comprising: interface circuitry; and processor circuitry, coupled with the interface circuitry, the processor circuitry to perform the steps of any of examples 1-4.

Example 6 can include one or more computer-readable media including stored thereon a sequence of instructions that, when executed by one or more processors, causes a (UE) to perform any of the steps of examples 1-4.

Example 7 can include an apparatus comprising: interface circuitry; and processor circuitry, coupled with the interface circuitry, the processor circuitry to: decode a first message received from a network to identify a request for an indication as to whether a user equipment supports protection of a UE parameter update (UPU) header; and generate, for transmission to the network, a second message that includes the indication as to whether the UE supports protection of the UPU header based at least in part on the first message.

Example 8 can include an apparatus of example 7, wherein the first message includes an indication as to whether the network supports protection of the UPU header.

Example 9 can include an apparatus of example 8, wherein the processing circuitry is further to: determine whether to include the indication as to whether the UE supports protection of the UPU header based at least in part on the indication as to whether the network supports protection of the UPU header.

Example 10 can include an apparatus of any of examples 7-9, wherein the first message includes first UE configuration parameters in a UPU transparent container, wherein the request for the indication includes a request for an acknowledgment, and wherein the processing circuitry is further to: configure an information element (IE) to include the indication as to whether the UE supports protection of the UPU header, wherein the second message includes the IE.

Example 11 can include an apparatus of any of examples 10, wherein the first message comprises an unprotected UPU header, and wherein the processing circuitry is further to: receive second UE configuration parameters in a UPU transparent container, wherein the second UPU transparent container includes a protected UPU header based at least in a part on the indication included in the IE.

Example 12 can include a method performed by a UE, the method comprises any of the steps of example 7-11.

Example 13 can include one or more computer-readable media including stored thereon a sequence of instructions that, when executed by one or more processors, causes a (UE) to perform any of the steps of examples 7-11.

Example 14 can include one or more computer-readable media including stored thereon a sequence of instructions that, when executed by one or more processors, causes a user equipment (UE) to: receive a first message including UE configuration parameters in a UE parameter update (UPU) transparent container from a network, the first message including a protected UPU header; decode the UPU header and a payload of the first message; validate the first message from the network; and update UE configuration parameters based at least in part on the UE configuration parameters included in the first message.

Example 15 can include the one or more computer-readable media of example 14, wherein validating the first message from the network comprises: calculating a first enhanced UPU- MAC-I_{AUSF} security token value based at least in a part on the decoded UPU header; compare the first enhanced UPU-MAC-I_{AUSF} security token value to a second enhanced UPU-MAC-I_{AUSF} security token received in the first message, wherein the first message is validated based at least in part on the comparison.

Example 16 can include the one or more computer-readable media of any of examples 14 or 15, wherein the first message is a NAS transport message.

Example 17 can include the one or more computer-readable media of any of examples 14-16, wherein the first message includes an indication that the UPU header is protected, and wherein the sequence of instructions that, when executed by one or more processors, further causes the UE to: determine whether the UPU is protected based at least in part on the indication, wherein the UE decodes the UPU header and a payload of the first message based at least in part on the determination.

Example 18 can include the one or more computer-readable media of example 17, wherein the indication is a bit included in a UE parameters update transparent container or in an information element distinct from the UE parameters update transparent container.

Example 19 can include one or more computer-readable media including stored thereon a sequence of instructions that, when executed by one or more processors, causes a UE to: receive a first message including UE configuration parameters in a UPU transparent container from a network; determine that the first message includes a protected UPU header; disregard the first message based at least in part on the determination and not supporting UPU header protection.

Example 20 can include the one or more computer-readable media of example 19, wherein the sequence of instructions that, when executed by one or more processors, causes a UE to: transmit an indication to the network that includes a vindication of not supporting UPU header protection.

Example 21 can include a method performed by a UE, the method comprises any of the steps of example 14-20.

Example 22 can include an apparatus comprising: interface circuitry; and processor circuitry, coupled with the interface circuitry, the processor circuitry to perform the steps of any of examples 14-20.

Example 23 can include a network node, comprising: interface circuitry; and processor circuitry, coupled with the interface circuitry, the processor circuitry to: receive, from a user equipment, a first message including an indication of supporting protection of a UPU header; determine to update UE configuration parameters; encode the UPU header and a first payload based at least in part on the indication and the determination; generate a second message including the encoded UPU header and first payload; and transmit the second message to the UE based at least in part on the determination.

Example 24 can include the network node of example 23, wherein the indication is received via a REGISTRATION REQUEST message.

Example 25 can include the network node of any of examples 23 or 24, wherein the processor circuitry further to: transmit a third message including an unprotected UPU header, a second payload, and a request for an indication of whether the UE supports protection of the UPU header, wherein the first message is received based at least in part on the request.

Example 26 can include the network node of any of examples 23-25, wherein the processor circuitry further to: configure a UE parameters update transparent container to indicate that the UPU header is protected, wherein the second message includes the UE parameters update transparent container.

Example 27 can include a method performed by a UE, the method comprises any of the steps of example 23-26.

Example 28 can include one or more computer-readable media including stored thereon a sequence of instructions that, when executed by one or more processors, causes a (UE) to perform any of the steps of examples 23-26.

Example 29 can include a method comprising: generating a first message that includes an indication as to whether a user equipment (UE) supports protection of a UE parameter update (UPU) header; transmitting the first message to an access and mobility management function (AMF) of a network; and receiving, from the network, a second message including UE configuration parameters comprising a UPU transparent container including a UPU header and UPU data, the UPU header protected based at least in part on the indication.

Example 30 can include the method of example 29, wherein the first message is a UE STATE INDICATION message.

Example 31 can include the method of any of examples 29 or 30, wherein the method further comprises: generating a REGISTRATION REQUEST message for the AMF, wherein the REGISTRATION REQUEST message includes the first message.

Example 32 can include the method of any of examples 29-31, wherein generating the first message that includes an indication as to whether the UE supports protection of the UPU header comprises: configuring an information element (IE) to include a bit indicating that the UE supports protecting the UPU header.

Example 33 can include the method of example 32, wherein the IE is a UE policy classmark IE or a mobility management (MM) capability IE.

Example 34 can include the method of any of example 29-33, wherein the indication as to whether the UE supports protection of the UPU header is an explicit indication as to whether the UE supports protection of the UPU header.

Example 35 can include an apparatus comprising: processor circuitry for performing any of the steps of examples 29-34.

Example 36 can include the one or more computer-readable media including stored thereon a sequence of instructions that, when executed by one or more processors, causes a user equipment (UE) to perform any of the steps of example 29-34.

Example 37 can include an apparatus comprising: processor circuitry configured to: decode a first message received from a network to identify a request for an indication as to whether a user equipment supports protection of a UE parameter update (UPU) header; and generate, for transmission to the network, a second message that includes the indication as to whether the UE supports protection of the UPU header based at least in part on the first message.

Example 38 can include the apparatus of example 37, wherein the first message includes an indication as to whether the network supports protection of the UPU header.

Example 39 can include the apparatus of any of examples 37 or 38, wherein the processing circuitry is further configured to: determine whether to include the indication as to whether the UE supports protection of the UPU header based at least in part on the indication as to whether the network supports protection of the UPU header.

Example 40 can include the apparatus of any of examples 37-39, wherein the first message includes first UE configuration parameters in a UPU transparent container, wherein the request for the indication includes a request for an acknowledgment, and wherein the processing circuitry is further to: configure an information element (IE) to include the indication as to whether the UE supports protection of the UPU header, wherein the second message includes the IE.

Example 41 can include the apparatus of any of examples 37-40, wherein the first message comprises an unprotected UPU header, wherein the processing circuitry is further configured to: receive second UE configuration parameters in a second UPU transparent container, and wherein the second UPU transparent container includes a protected UPU header based at least in a part on the indication included in the IE.

Example 42 can include a method for performing any of the steps of examples 37-41.

Example 43 can include the one or more computer-readable media including stored thereon a sequence of instructions that, when executed by one or more processors, causes a user equipment (UE) to perform any of the steps of example 37-41.

Example 44 can include one or more computer-readable media including stored thereon a sequence of instructions that, when executed by one or more processors, causes a user equipment (UE) to: receive a first message including UE configuration parameters in a UE parameter update (UPU) transparent container from a network, the first message including a protected UPU header; decode the UPU header and a payload of the first message; validate the first message from the network; and update UE configuration parameters based at least in part on the UE configuration parameters included in the first message.

Example 45 can include the one or more computer-readable media of example 44, wherein validating the first message from the network comprises: calculating a first enhanced UPU- Message Authentication Code (MAC)-I authentication server function (AUSF) security token value based at least in a part on the decoded UPU header; compare the first enhanced UPU-MAC-IAUSF security token value to a second enhanced UPU-MAC-IAUSF security token received in the first message, wherein the first message is validated based at least in part on the comparison.

Example 46 can include the one or more computer-readable media of any of examples 44 or 45, wherein the first message is a non-access stratum (NAS) transport message.

Example 47 can include the one or more computer-readable media of any of examples 44-46, wherein the first message includes an indication that the UPU header is protected, and wherein the sequence of instructions that, when executed by one or more processors, further causes the UE to: determine whether the UPU is protected based at least in part on the indication, wherein the UE decodes the UPU header and a payload of the first message based at least in part on the determination.

Example 48 can include a method for performing any of the steps of examples 44-47.

Example 49 can include an apparatus comprising: processor circuitry for performing any of the steps of examples 44-47.

Example 50 can include a method comprising: generating, for transmission to an access and mobility management function (AMF) of a network, a first message that includes an indication as to whether a user equipment (UE) supports protection of a UE parameter update (UPU) header; and processing, a second message from the network from the network, the second message including UE configuration parameters comprising a UPU transparent container including a UPU header and UPU data, the UPU header protected based at least in part on the indication.

Example 51 can include the method of example 50, wherein the first message is a UE STATE INDICATION message.

Example 52 can include the method of any of examples 50 or 51, wherein the method further comprises: generating a REGISTRATION REQUEST message for the AMF, wherein the REGISTRATION REQUEST message includes the first message.

Example 53 can include the method of any of examples 50-52, wherein generating the first message that includes an indication as to whether the UE supports protection of the UPU header comprises: configuring an information element (IE) to include a bit indicating that the UE supports protecting the UPU header.

Example 54 can include the method of example 53, wherein the IE is a UE policy classmark IE or a mobility management (MM) capability IE.

Example 55 can include the method of any of examples 50-54, wherein the indication as to whether the UE supports protection of the UPU header is an explicit indication as to whether the UE supports protection of the UPU header.

Example 56 can include an apparatus comprising: interface circuitry; and processor circuitry, coupled with the interface circuitry, the processor circuitry configured to perform any of the steps of examples 50-55.

Example 57 can include one or more non-transitory computer-readable media including stored thereon a sequence of instructions that, when executed by one or more processors, causes a user equipment (UE) to perform any of the steps of examples 50-55.

Example 58 can include an apparatus comprising: interface circuitry; and processor circuitry, coupled with the interface circuitry, the processor circuitry configured to: decode a first message received from a network to identify a request for an indication as to whether a user equipment supports protection of a UE parameter update (UPU) header; and generate, for transmission to the network, a second message that includes the indication as to whether the UE supports protection of the UPU header based at least in part on the first message.

Example 59 can include the apparatus of example 58, the first message includes an indication as to whether the network supports protection of the UPU header.

Example 60 can include the apparatus of any of examples 58 or 59, wherein the processing circuitry is further configured to: determine whether to include the indication as to whether the UE supports protection of the UPU header based at least in part on the indication as to whether the network supports protection of the UPU header.

Example 61 can include the apparatus of any of examples 58-60, wherein the first message includes first UE configuration parameters in a UPU transparent container, wherein the request for the indication includes a request for an acknowledgment, and wherein the processing circuitry is further to: configure an information element (IE) to include the indication as to whether the UE supports protection of the UPU header, wherein the second message includes the IE.

Example 62 can include the apparatus of any of examples 58-61, wherein the first message comprises an unprotected UPU header, and wherein the processing circuitry is further configured to: process second UE configuration parameters in a second UPU transparent container, wherein the second UPU transparent container includes a protected UPU header based at least in a part on the indication included in the IE.

Example 63 can include the apparatus of any of examples 58-62, wherein the first message is a UE STATE INDICATION message.

Example 64 can include the apparatus of any of examples 58-63, wherein the indication as to whether the UE supports protection of the UPU header is an explicit indication as to whether the UE supports protection of the UPU header.

Example 65 can include a method for performing any of the steps of examples 58-64.

Example 66 can include one or more non-transitory computer-readable media including stored thereon a sequence of instructions that, when executed by one or more processors, causes a user equipment (UE) to perform any of the steps of examples 58-64.

Example 67 can include one or more non-transitory computer-readable media including stored thereon a sequence of instructions that, when executed by one or more processors, causes a user equipment (UE) to: process a first message including UE configuration parameters in a UE parameter update (UPU) transparent container from a network, the first message including a protected UPU header; decode the UPU header and a payload of the first message; and validate the first message from the network; and update UE configuration parameters based at least in part on the UE configuration parameters included in the first message.

Example 68 can include the one or more non-transitory computer-readable media of example 67, wherein validating the first message from the network comprises: calculating a first enhanced UPU- Message Authentication Code (MAC)-I authentication server function (AUSF) security token value based at least in a part on the decoded UPU header; and compare the first enhanced UPU-MAC-IAUSF security token value to a second enhanced UPU-MAC-IAUSF security token received in the first message, wherein the first message is validated based at least in part on the comparison.

Example 69 can include the one or more non-transitory computer-readable media of any of examples 67 or 68, wherein the first message is a non-access stratum (NAS) transport message.

Example 70 can include the one or more non-transitory computer-readable media of any of examples 67-69, wherein the first message includes an indication that the UPU header is protected, and wherein the sequence of instructions that, when executed by one or more processors, further causes the UE to: determine whether the UPU is protected based at least in part on the indication, wherein the UE decodes the UPU header and a payload of the first message based at least in part on the determination.

Example 71 can include the one or more non-transitory computer-readable media of nay of examples 67-70, wherein the indication is a bit included in a UE parameters update transparent container or in an information element distinct from the UE parameters update transparent container.

Example 72 can include the one or more non-transitory computer-readable media of any of examples 67-71, wherein the first message is a UE STATE INDICATION message.

Example 73 can include the one or more non-transitory computer-readable media of any of examples 67-72, wherein the indication as to whether the UE supports protection of the UPU header is an explicit indication as to whether the UE supports protection of the UPU header.

Example 74 can include a method for performing any of the steps of examples 67-73.

Example 75 can include an apparatus comprising: interface circuitry; and processor circuitry, coupled with the interface circuitry, the processor circuitry configured to perform any of the steps of examples 67-73.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method comprising:
generating a first message that includes an indication as to whether a user equipment (UE) supports protection of a UE parameter update (UPU) header;
transmitting the first message to an access and mobility management function (AMF) of a network; and
receiving, from the network, a second message including UE configuration parameters comprising a UPU transparent container including a UPU header and UPU data, the UPU header protected based at least in part on the indication.

2. The method of claim 1, wherein the first message is a UE STATE INDICATION message.

3. The method of any one of claims 1-2, wherein the method further comprises:
generating a REGISTRATION REQUEST message for the AMF, wherein the REGISTRATION REQUEST message includes the first message.

4. The method of any one of claims 1-3, wherein generating the first message that includes an indication as to whether the UE supports protection of the UPU header comprises:
configuring an information element (IE) to include a bit indicating that the UE supports protecting the UPU header.

5. The method of claim 3, wherein the IE is a UE policy classmark IE or a mobility management (MM) capability IE.

6. The method of any one of claims 1-5, wherein the indication as to whether the UE supports protection of the UPU header is an explicit indication as to whether the UE supports protection of the UPU header.

7. An apparatus comprising:
processor circuitry configured to:
decode a first message received from a network to identify a request for an indication as to whether a user equipment supports protection of a UE parameter update (UPU) header; and
generate, for transmission to the network, a second message that includes the indication as to whether the UE supports protection of the UPU header based at least in part on the first message.

8. The apparatus of claim 7, wherein the first message includes an indication as to whether the network supports protection of the UPU header.

9. The apparatus of claim 8, wherein the processing circuitry is further configured to:
determine whether to include the indication as to whether the UE supports protection of the UPU header based at least in part on the indication as to whether the network supports protection of the UPU header.

10. The apparatus of any one of claims 7-9, wherein the first message includes first UE configuration parameters in a UPU transparent container, wherein the request for the indication includes a request for an acknowledgment, and wherein the processing circuitry is further to:
configure an information element (IE) to include the indication as to whether the UE supports protection of the UPU header, wherein the second message includes the IE.

11. The apparatus of claim 10, wherein the first message comprises an unprotected UPU header, and wherein the processing circuitry is further configured to: receive second UE configuration parameters in a second UPU transparent container, wherein the second UPU transparent container includes a protected UPU header based at least in a part on the indication included in the IE.

12. One or more computer-readable media including stored thereon a sequence of instructions that, when executed by one or more processors, causes a user equipment (UE) to:
receive a first message including UE configuration parameters in a UE parameter update (UPU) transparent container from a network, the first message including a protected UPU header;
decode the UPU header and a payload of the first message;
validate the first message from the network; and
update UE configuration parameters based at least in part on the UE configuration parameters included in the first message.

13. The one or more computer-readable media of claim 12, wherein validating the first message from the network comprises:
calculating a first enhanced UPU- Message Authentication Code (MAC)-I authentication server function (AUSF) security token value based at least in a part on the decoded UPU header; and
compare the first enhanced UPU-MAC-IAUSF security token value to a second enhanced UPU-MAC-IAUSF security token received in the first message, wherein the first message is validated based at least in part on the comparison.

14. The one or more computer-readable media of any one of claims 12-13, wherein the first message is a non-access stratum (NAS) transport message.

15. The one or more computer-readable media of any one of claims 12-14, wherein the first message includes an indication that the UPU header is protected, and wherein the sequence of instructions that, when executed by one or more processors, further causes the UE to:
determine whether the UPU is protected based at least in part on the indication, wherein the UE decodes the UPU header and a payload of the first message based at least in part on the determination.
